# EUROPEAN PATENT APPLICATION

(11) **EP 1 566 941 A1**
(43) Date of publication of application: **24.08.2005**
(21) Application number: 04291483.8
(22) Date of filing: 11.06.2004
(51) Int. Cl.: H04L 29/06

(54) **Method and device for enabling mono- and bi-directional communication between mobile equipment and smartcard applications**

(30) Priority: 19.02.2004 EP 04290447
(71) Applicant: Axalto S.A., 92120 Montrouge (FR)
(72) Inventor: Rangoni, Gabriel, 50 avenue Jean-Jaurès 92120 Montrouge (FR)

(57) **Abstract**

The method comprises the step of receiving a message from a mobile equipment application by a smartcard application (Z'), using a first protocol, whereby each message comprises a header field and a data field, the header field comprises a specific pattern for identifying messages belonging to a second protocol (Z) and the smartcard application (Z') decides (4.3) for the received message, based on the specific pattern, whether the message belongs to the second protocol (Z) or not. In this way, applications running on the mobile equipment receive access to local resources on the smartcard and vice versa.

## Description

### Field of the invention

The invention relates to a method and a device for enabling mono- and bi-directional communication between mobile equipment and smartcard applications.

The invention refers more precisely to communication between applications running on the mobile equipment and applications running on the smartcard (SIM) that would not have the possibility to communicate together without this invention.

### Background art

All communications between mobile equipment and SIM are based on ISO7816 protocol. This protocol allows the mobile equipment to send commands to the SIM and the SIM to reply to those commands both through the physical interface connecting both devices. This protocol is a master/slave protocol, the mobile equipment being the master.

GSM standards define another protocol layer standing over the previously described one to allow the SIM to send commands to the mobile equipment while organizing contents of exchanged information into logical blocks. This protocol is commonly called SimToolkit (STK).

Packets of information exchanged in both protocols are limited to 255 characters.

Independently from that, many recent mobile equipments offer the possibility to extend their functionality by embedding extra applications, which can be loaded, installed, run and removed at any time. Those applications run over mobile equipment operating system and have access to mobile equipment resources (screen, keypad, memory, network radio interface, IR port,...) through specific interfaces (called API). Similarly SIM functionality can be extended by extra applications running over SIM operating system, which have access to SIM resources (encryption engine, secure memory,...).

Such device operating systems supporting functionality extension after they are installed and operational are often referred to as "Open OS".

However, extending mobile equipment and SIM applications can only communicate together in a very limited way on many current Open-OS mobile equipments. Sometime they cannot communicate at all.

This is due to the fact many mobile equipment OS do not provide such functions in the API available to additional applications.

When communication is possible it is often limited to the possibility for a mobile equipment application to access SIM-phonebook and SMS storage file. However, the limited possibilities may be others in some cases.

As an example only, applications running over the mobile equipment open-OS have the possibility to add and retrieve information into/from the SIM phonebook. As another example, applications running over the mobile equipment open-OS have the possibility to send a specific request or specific command to the SIM and to receive in return an answer to this request.

### SUMMARY OF THE INVENTION

It is therefore an object of the invention to extend such a limited communication channel to make possible enhanced information and mutual request exchanges between mobile equipment and SIM.

This object is achieved by a method and a device for communication between a multitude of mobile equipment applications and a multitude of smartcard applications as defined in independent claims 1 and 6. Preferred embodiments are defined in the dependent claims.

Preferably, the method according to the invention comprises the step of receiving a message from a mobile equipment application by a smartcard application, using a first protocol, whereby each message comprises a header field and a data field, the header field comprises a specific pattern for identifying messages belonging to a second protocol and the smartcard application decides for the received message, based on the specific pattern, whether the message belongs to the second protocol or not.

As an advantage, this invention makes it possible for a application running over an OpenOS mobile equipment to communicate with an application running over an Open OS SIM. Each application having the possibilities to access local resources, it becomes then possible for them to access mutual resources by establishing an appropriate application protocol and exchanging information related to resource access or contents.

A further embodiment of the method for communication is defined according to which a message belonging to the second protocol is assembled by the smartcard application from a series of smaller parts if the size if the message belonging to the second protocol is larger than the maximum size for messages belonging to the first protocol.

This has the advantage of being able to transport large messages over the second protocol in case the first protocol has limitations regarding message size.

According to a further preferred embodiment, the smartcard application regularly receives a message from the mobile equipment application, checks whether any smartcard application has a message to send and if yes, sends it to the mobile equipment application.

This embodiment has the advantage that the second protocol allows for bi-directional communication even if the first protocol is a master-slave protocol.

According to a further embodiment, the first protocol conforms with the ISO 7816 protocol standard.

According to a further embodiment, the first protocol conforms with the GSM 11.11 (SimToolkit) standard.

### BRIEF DESCRIPTION OF THE DRAWINGS

The foregoing and other objects, aspects and advantages of the invention will be better understood from the following detailed description of a preferred embodiment of the invention made with reference to the drawings, in which:
- Fig. 1: shows the communications channel and APIs according to a preferred embodiment of the invention.
- Fig. 2: shows the principle of realizing the transport and network layer of protocol Z on top of the ISO 7816/GSM 11.11 data link layer
- Fig. 3: is another representation of the principle of Fig. 2
- Fig. 4: is a diagram showing how messages belonging to the second protocol are sent and processed using the first protocol.
- Fig. 5: shows possible addressing schemes for communication between the mobile equipment and the SIM
- Fig. 6: shows parts of the header of a message belonging to the second protocol
- Fig.: 7a shows how large messages are split into several small messages and sent over the first protocol.
- Fig. 7b: shows how an answer being split into several parts is retrieved over the first protocol and put together to form an answer of the second protocol.
- Fig. 8: shows how symmetrical communication is handled between the mobile equipment and the SIM

### DETAILED DESCRIPTION OF A PREFERRED EMBODIMENT OF THE INVENTION

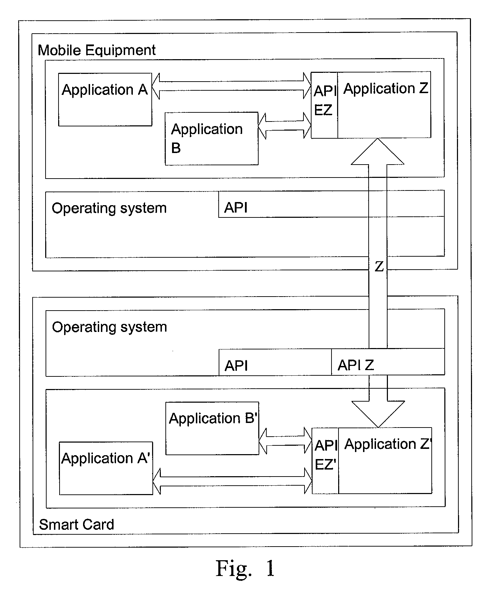

Referring now to the drawings, Fig.1 illustrates a preferred embodiment of the invention comprising a mobile equipment (ME) having a first operating system and running applications A, B and Z, a smartcard (SIM) having a second operating system and running applications A', B' and Z'.

Applications Z and Z' are responsible for enabling a bi-directional communication by implementing the management of protocol Z.

Application Z exports an application programming interface (API) EZ and application Z' exports an application programming interface (API) EZ'. APIs EZ and EZ' are application programming interfaces giving access to applications A and B to communicate with A' and B' using protocol Z.

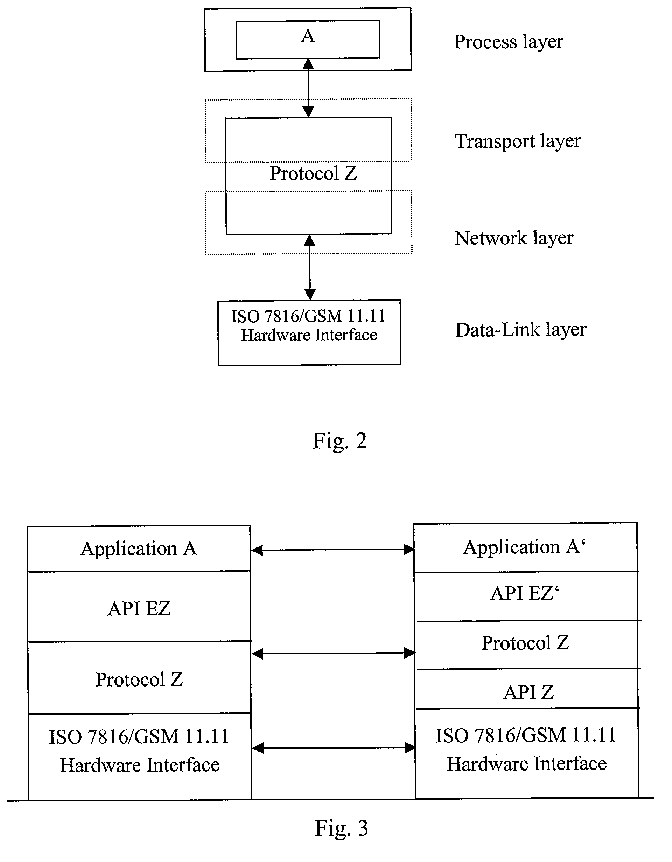

Referring now to Fig. 2 and 3, Protocol Z includes network and transport layers and is implemented over the ISO 7816 standard protocol. According to OSI model, protocol Z ensures functionality of the so-called network and transport layers.

It relies on data-link layer that implements ISO 7816 protocol. API EZ and EZ' to provide the necessary methods to the application layer to communicate. It may as an example follow the Berkeley sockets model. API Z is a optional extension permitting the connection between data-link and network layers.

Optionally, the SIM operating system can export an API Z for use by SIM additional applications. API Z is necessary and extends SIM OS API when SIM applications have no way to interfere with communication between mobile equipment applications and SIM OS (the possibility of such communication being a minimal requirement).

The data-link layer, which is not part of this invention, may not implement all the ISO 7816 and GSM 11.11 commands. However it needs to provide as a minimum capability the support for APDUs and RESPONSE-APDUs to permit data exchange between SIM and mobile equipment.

The capability for applications to
- Send APDU commands and receive APDU responses (on the mobile equipment side)
- Receive APDU commands and send APDU response (on the SIM side) through this API are minimum requirements.

The number of commands that can be sent may be very limited. The minimum is either
- One IN-OUT command supported only
- One IN and one OUT command supported only

As an example, an application running on the mobile equipment only has the capability to send two commands to the SIM, which are WRITE_RECORD and READ_RECORD. In this example, because the API may provide a higher level access (GSM 11.11) the available commands may be WriteToADNFIle and ReadFromADNFile for instance, which call one or several command APDUs.

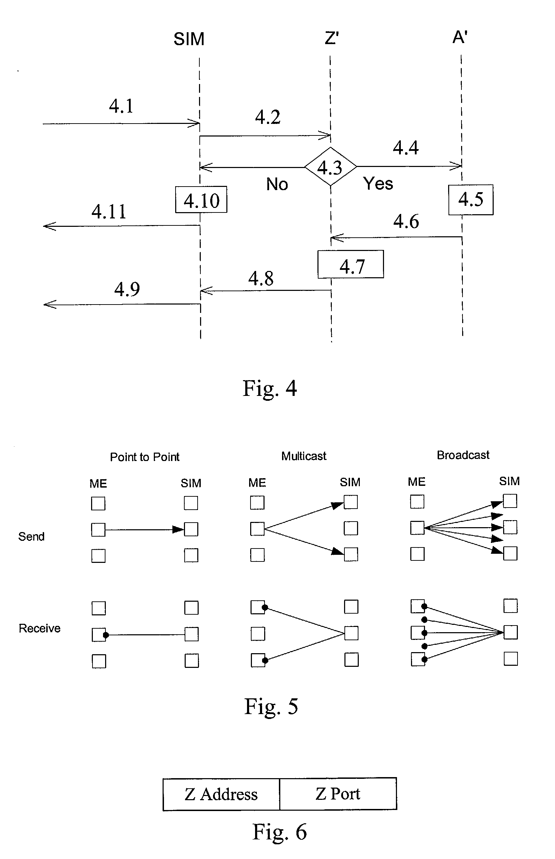

Referring now to Fig. 4, protocol Z formatted messages are transported in the data field of the available command APDUs.

Protocol Z formatted messages are made of a header and a data field. The header includes a specific pattern made coded on one or several bytes that can be either an arbitrary fixed value or a checksum or any other static or dynamic value making possible to distinguish between standard commands and messages belonging to the class of protocol Z messages.

As shown in Fig. 4, those commands are then diverted from their original function. The SIM OS receives a message in step 4.1 that may be either a standard command or a command diverted from its normal function and sent by application Z. The SIM OS forwards this message to application Z' in step 4.2. In step 4.3 application Z' examines each received message and decides whether it is protocol Z message by checking for the presence of the specific pattern.

If the message belongs to protocol Z it is sent to its destination, application A', in step 4. Application A' processes the data in step 4.5. In step 4.6, application A' sends an answer to application Z'. In step 4.7, application Z' stores the answer into EF_{ADN}. Then, it hands over control to the SIM OS in step 4.8. The SIM OS sends an ADPU Response with SW set to 9000 in step 4.9.

Otherwise, if the message does not belong to protocol Z, the message, together with the data, is processed by the SIM OS in step 4.10 as usual. Then, the SIM OS returns an ADPU Response with SW set to 9000 in step 4.11.

Fig. 5 illustrates different combinations of addressing mechanisms in mult-application systems. In such context a mechanism needs to identify originating and destination applications to properly route messages.

Protocol Z offers the ability to connect several applications together and simultaneously by supporting addressing and connected and connectionless modes. Destination address and originating address are part of the protocol Z header.

As shown in Fig. 6, those addresses are themselves made of two parts, a Z address and a Z port, where the Z address uniquely identifies the interface managing the protocol Z and the Z port identifies both the originating and destination applications (services).

Depending on the diverted commands used, the maximum length of transmitted data in APDU commands may be a few tenths of bytes. In such a case the application Z in charge of implementing protocol Z breaks up messages exchange between the end-to-end protocol Z layers into packets small enough to fit in the underlying data buffers.

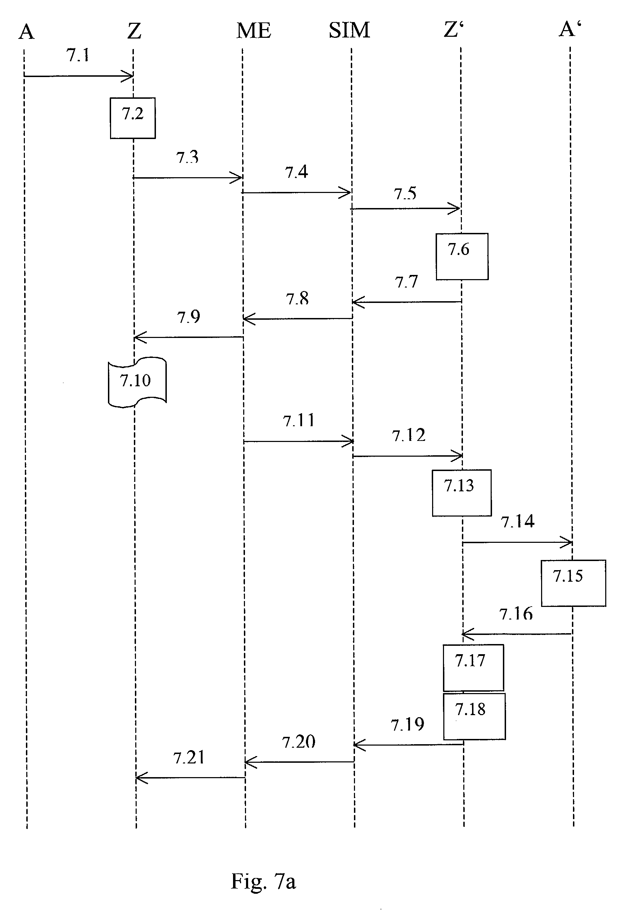

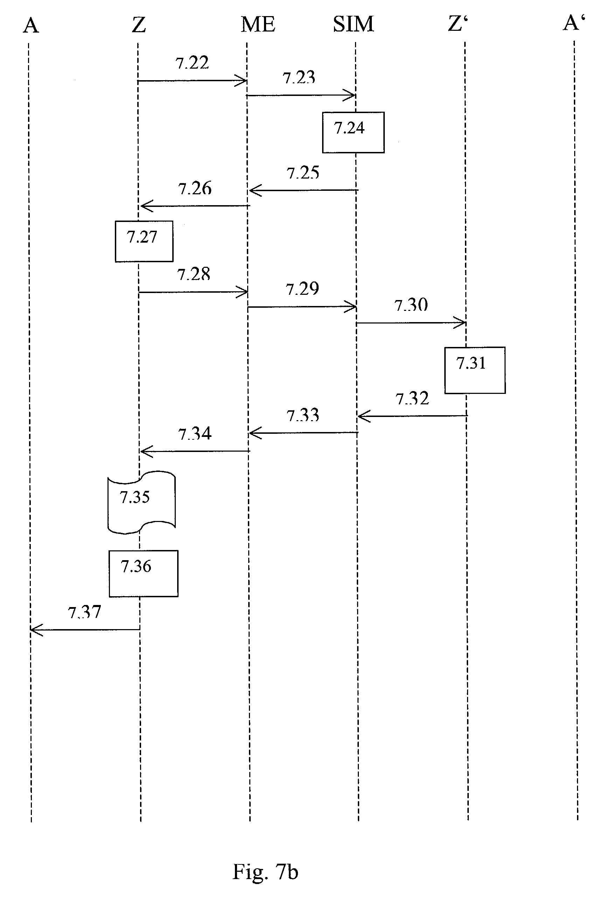

Fig. 7a and 7b show how such fragmentation can be handled.

In Fig. 7a, application A sends data and destination address(es) to application Z in step 7.1. Application Z splits the data into n parts fitting into the ADN standard data in step 7.2. Then, application Z writes the first ADN data part to the mobile equipment operating system in step 7.3. The mobile equipment operating system sends the first data part to smartcard operating system in step 7.4. The smartcard operating system sends the first data part to application Z' running on the smartcard in step 7.5. Application Z' saves the first data part in step 7.6. Then, it sends an OK response to the smartcard operating system in step 7.7. The smartcard operating system forwards the response to the mobile equipment operating system in step 7.8 and this in turn forwards the response to application Z in step 7.9. Subsequently, application Z sends all parts from 2 to n in steps 7.10, 7.11, 7.12 and they are concatenated by application Z' in step 7.13.

Following step 7.13, application Z' sends the entire data to application A' in step 7.14. Application A' processes the data in step 7.15. Then, it sends the answer to application Z' in step 7.16. Application Z' splits the answer into n parts fitting into the ADN standard data in step 7.17 and then stores part 1 of the answer into EF_{ADN} in step 7.18. Application Z' then sends an OK response to application Z which is again forwarded by the SIM OS and the mobile equipment operating system (ME OS) in steps 7.19, 7.20 and 7.21.

As shown in Fig. 7b, having received the first OK response from application Z', application Z sends a request for the next part to application Z' which is forwarded by the ME OS and the SIM OS in steps 7.22 and 7.23. In step 7.24, answer part 1 is retrieved from EF_{ADN} and sent to application Z in steps 7.25 and 7.26. In step 7.27, the first answer part is saved by application Z. In step 7.28, application Z requests the next part from application Z', the request being communicated from the ME OS to the SIM OS in step 7.29 and from the SIM OS to application Z' in step 7.30. Application Z' stores the next part of the answer into EF_{ADN} in step 7.31 and returns an OK message to application Z in steps 7.32, 7.33 and 7.34. Subsequently, the remaining answer parts from 2 to n are retrieved in the same manner in step 7.35 and concatenated to form the entire answer in step 7.36. Upon completion of this process, the complete answer data is forwarded to application A in step 37.

In that case the diverted commands are the ones that permit to write to and read from the ADN file but others commands may be used instead according to the same principle.

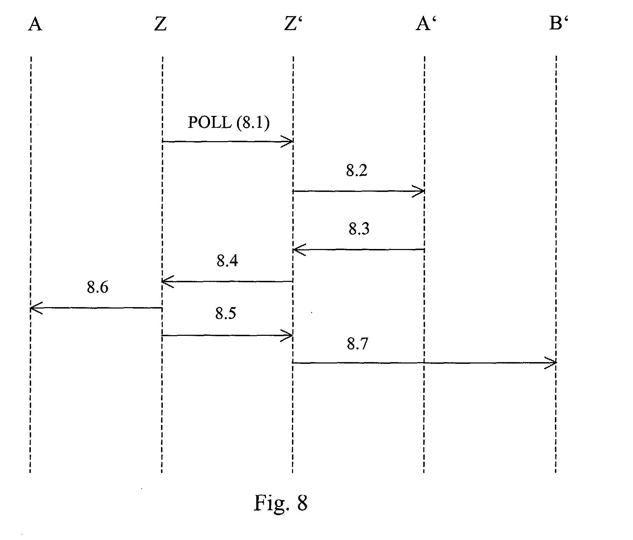

Fig. 8 shows how to allow client-server relationship to work in both directions over a data-link layer running in master slave mode, mobile equipment being the master and SIM being the slave.

In step 8.1 application Z regularly sends a Poll command, whose frequency can be tuned. Upon reception of each of these commands, application Z' sequentially checks in step 8.2 whether bounded applications (set up for using Protocol Z) have any message to send. In such a case, messages are sent in steps 8.3, 8.4 and 8.6. On reception of the next poll command in step 8.5, application Z checks if the following bounded application has anything to send.

Application Z is responsible for sending as many poll requests as the number of bound applications before processing any command queuing for transmission to the SIM. This is to ensure that all on SIM applications have a chance to perform actions in the current time slot.

The network/transport layer API is made of API EZ and API EZ'. The role of this API is to provide the necessary programming interface for applications running on a mobile equipment and a SIM to communicate together according to their own application protocol over the protocol Z.

The API provides the necessary services to client and server applications (that can be either on the SIM or on the mobile equipment). Such services include for instance the following services (Server: create endpoint, bind address, specify queue, wait for connection. Client: create endpoint, bind address, connect to server, transfer data).

## Claims

1. Method for communication between a multitude of mobile equipment applications (A, B, Z) running on a mobile equipment (ME), and a multitude of smartcard applications (A', B', Z') running on a smartcard (SIM), comprising the step of
a) receiving a message from a mobile equipment application (Z) on a smartcard application (Z'), using a first protocol, whereby each message comprises a header field and a data field,
wherein
the header field of the message comprises a specific pattern for identifying messages belonging to a second protocol (Z) and in that the smartcard application (Z') decides for the received message, based on the specific pattern, whether the message belongs to the second protocol (Z) or not.

2. Method for communication according to claim 1, wherein a message belonging to the second protocol (Z) is assembled by the smartcard application (Z') from a series of smaller parts, if the size of the message belonging to the second protocol is larger than the maximum size for messages belonging to the first protocol.

3. Method for communication according to claim 1 or 2, wherein the smartcard application (Z') regularly receives a message (POLL) from the selected mobile equipment application (Z), checks whether any smartcard application (A', B', Z') has a message to send and if yes, sends it to the selected application (Z).

4. Method for communication according to claim 1, 2 or 3, **characterized in that** the first protocol conforms with the ISO 7861 protocol standard.

5. Method for communication according to claim 1, 2 or 3, **characterized in that** the first protocol conforms with the GSM 11.11 (SimToolkit) standard.

6. Smartcard (SIM), comprising:
an operating system,
a multitude of applications (A', B', Z') stored on the smartcard (SIM),
**characterized in that**
at least one application (Z') implements a method for communication according to one of claims 1 to 5.

7. Smartcard (SIM), wherein the operating system (SIM OS) implements a method for communication according to one of claims 1 to 5.
